# EUROPÄISCHE PATENTANMELDUNG

(11) **EP 0 894 846 A2**
(43) Veröffentlichungstag der Anmeldung: **03.02.1999**
(21) Anmeldenummer: 98113449.7
(22) Anmeldetag: 18.07.1998
(51) Int. Cl.: C10L 5/48, C04B 7/44, C21B 5/00

(54) **Feinteiliger Brennstoff, sowie Verfahren zur Herstellung desselben**

(30) Priorität: 22.07.1997 DE 19731353
(71) Anmelder: Mutabor GmbH, Management für Umwelt Technologie, Abfallwirtschaft Beratung Organisation und Verkauf Recycling, 17373 Ueckermünde (DE)
(72) Erfinder: Jesse, Erich, Dipl.-Ing, 18055 Rostock (DE)
(74) Vertreter: Freiherr von Uexküll, Jürgen-Detlev, Dr. Rer. Nat. Dipl.-Chem.

(57) **Zusammenfassung**

Die Erfindung betrifft einen feinteiligen Brennstoff insbesondere zur Beheizung von Hochöfen oder Zementdrehrohröfen bestehend aus einem Gemisch aus
A - einer Grundkomponente aus
   1) zerkleinertem Kunststoff-Abfall (SLF),
   2) Branntkalk (CaO),
   und
B- ein oder mehreren Zusatzkomponenten enthaltend Kunststoffe, Kohlenstaub, Altöl, bituminöse Bestandteile, Stearate und/oder andere KW-haltige Produkte
sowie einem Verfahren zur Herstellung desselben, bei welchem man zur Herstellung der Gundkomponente A eine Mischung aus zerkleinertem Kunststoffabfall (SLF) mit Branntkalk vermischt und durch Wasserzusatz eine Endfeutchte von 20 bis 30 und vorzugsweise 25 Gew.% Wasser einstellt, wobei die Zusatzkomponente B und gegebenenfalls die eisenhaltige weitere Zusatzkomponente während oder nach dieser Vermischung hinzugefügt wird.

## Beschreibung

Die Erfindung betrifft einen feinteiligen Brennstoff, insbesondere zur Beheizung von Hochöfen oder Zementdrehrohröfen sowie ein Verfahren zur Herstellung desselben

Aus der DE 195 41 673 A1 ist es bekannt, zur Verbesserung der pneutimatischen Förderbarkeit von Kunststoffmaterial beim Einsatz als Energieträger in Hochöfen den zerkleinerten Altkunststoffen als Trägerstoff einen Kohlenstoffträger vorzusehen, der auf Staubfeinheit gemahlen und vorher oder gleichzeitig auf eine Restfeuchte unter 2 bis 1 % getrocknet werden muß. Abgesehen davon, daß das Trocknen und die Feinstvermahlung von Kohlenstoff kostenaufwendig ist, wird bei diesem Verfahren die Verwendung anderer den Brennwert steigernden Komponenten ausgeschlossen. Letztlich ist es aus der DE 41 39 348 C1 bekannt, bei einem Verfahren zur Entschwefelung von Rauchgasen bei mit Kohlenstaub betriebenen Feuerungen der Kohle vor der Verbrennung Calciumcarbonat, Calciumhydroxyd und/oder Calciumoxyd zuzusetzen, um dann Wasser in das Rauchgas einzudüsen, um durch die Umsetzung von Calciumhydroxyd mit Schwefeldioxyd unter Bildung von Calciumsulfat eine Entschwefelung zu ermöglichen.

Der Erfindung liegt die Aufgabe zugrunde, einen neuartigen feinteiligen Brennstoff sowie ein Verfahren zur Herstellung desselben vorzuschlagen, der insbesondere zur Beheizung von Hochöfen oder Zementdrehrohröfen geeignet ist, wobei als brennwertliefernde Substanz insbesondere zerkleinerter Kunststoffabfall eingesetzt wird, dessen Entsorgung heuzutage ein Umweltproblem darstellt.

Zur Lösung dieser Aufgabe wird ein feinteiliger Brennstoff vorgeschlagen, der aus einem Gemisch aus A einer Grundkomponente aus zerkleinertem Kunststoffabfall und Branntkalk und ferner ein oder mehreren Zusatzkomponenten besteht, die weitere Kunststoffe, Kohlenstaub, Altöl, bituminöse Bestandteile, Stearate und/oder andere KW-haltige Produkte enthält.

Die Anwesenheit von Branntkalk ist bei der Zementherstellung unproblematisch und im Hochofen bzw. im Stahlwerk als Zuschlagsstoff erforderlich.

Der in der Grundkomponente A eingesetzte zerkleinerte Kunststoffabfall wird allgemein unter der Bezeichnung SLF = Shredder Leicht Fraktion bezeichnet und besteht aus den allgemein bei der Entsorgung anfallenden Kunststoffen auf Basis von Polyäthylen, Polyprophylen, Polyvinylchlorid und Polyesterkunststoffen. Dieser Kunststoffabfall wird auf eine Teilchengröße im Millimeterbereich zerkleinert bzw. zerfasert und über einen Magnetabscheider von metallischen Fremdstoffen befreit.

Der zum Einsatz kommende Branntkalk (CaO) kann von handelsüblicher Qualität sein.

Zur Herstellung der Grundkomponente wird eine Mischung aus zerkleinertem Kunststoffabfall (SLF) mit Branntkalk vermischt und durch Wasserzusatz auf eine Endfeuchte von 20 bis 30 und vorzugsweise 25 Gew.% Wasser eingestellt. Durch die Wasserzugabe erfolgt eine Ablöschung des Kalks unter Bildung eines feinkörnigen blas- und rieselfähigen Produktes mit Korngrößen zwischen 1 und 30 mm und vorzugsweise von 5 bis 10 mm.

Der Wasserzusatz soll so bemessen sein, daß das Endprodukt eine Endfeuchte von 20 bis 30 und vorzugsweise 25 Gew.% Wasser enthält. Unter Endfeuchte wird hier der Wassergehalt verstanden, der sich etwa vier Stunden nach der Reaktion während des Umwälzens, des Vermischens und des Transportes einstellt.

Bei der Grundkomponente A beträgt der Anteil an Kunststoffabfall mindestens 50 Gew.% und der des Branntkalkes 3 bis 10 Gew.%.

Während des Vermischens der beiden Bestandteile der Grundkomponente oder anschließend an dieses Vermischen werden als Zusatzkomponenten die den Brennwert erhöhenden Bestandteile zugegeben wie weitere Kunststoffe, Kohlenstaub, Altöl, bituminöse Bestandteile, Stearate und/oder andere KW-haltige Substanzen. Als weitere Zusatzkomponente können noch eisenhaltige Bestandteile wie Eisenoxyde, Schleifstäube oder Schleifschlämme zugesetzt werden, die bei der Verwendung in Hochöfen bzw. im Stahlwerk keinen negativen Einfluß haben und die bei Einsatz bei der Zementherstellung das Endprodukt vorteilhaft beeinflussen, insbesondere wenn bei der Zementherstellung eisenarme Ausgangsprodukte verwendet werden.

Das anfallende Endprodukt hat entweder eine blas- oder rieselfähige Konsistenz mit Korngrößen zwischen 1 bis 30 mm und vorzugsweise von 5 bis 10 mm. Das Material kann auch in stückiger, d.h. pelletierter oder brigettierter Form beispielsweise in Größen zu 70 mm Kantenlänge verarbeitet werden.

Im folgenden wird die Erfindung anhand von Beispielen näher erläutert:

### Beispiel 1:

Zur Herstellung eines Brennstoffes für Zementdrehrohröfen wurden je Tonne Fertigprodukt folgende Mengen nach dem oben erläuterten Verfahren eingesetzt:
- 800 kg: Leichtshredder aus der Autoabwrackung
- 40 kg: Branntkalk
- 70 kg: Wasser
- 30 kg: verbrauchte Ziehmittel aus der Drahtziehindustrie
- 60 kg: Metallabrieb

Der Heizwert des einblasfähigen Brennstoffes lag bei etwa 12.500 J/g(Ho). Dieser Brennstoff ist für die Zementindustrie dann besonders vorteilhaft, wenn eisenarme Kalk- oder Mergelsorten eingesetzt werden.

### Beispiel 2:

Zur Herstellung eines weiteren für Zementdrehrohröfen geeigneten Brennstoffes wurden die folgenden Ausgangsprodukte verwendet:
- 650 kg: Leichtshredder aus der Autoabwrackung
- 60 kg: Leichtshredder aus der Elektronikschrottaufbereitung
- 30 kg: Branntkalk
- 60 kg: Wasser
- 60 kg: verbrauchte Ziehmittel aus der Drahtziehindustrie
- 100 kg: Kunststoffreste
- 50 kg: Polierwatte mit Anhaftungen

Der Heizwert dieses Brennstoffes lag bei 17.800 J/g (Ho). Der höhere Heizwert erklärt sich durch den größeren Anteil an Ziehmittel, weiteren Kunststoffresten sowie Polierwatte.

### Beispiel 3:

Es wurde nach dem erfindungsgemäßen Verfahren ein Brennstoff für Zementdrehrohröfen hergestellt, wobei die folgenden Produkte zum Einsatz kamen:
- 490 kg: Leichtshredder aus der Autoabwrackung
- 200 kg: Kunststoffreste
- 40 kg: Branntkalk
- 60 kg: Wasser
- 60 kg: verbrauchte Ziehmittel aus der Drahtziehindustrie
- 50 kg: Polierwatte mit Anhaftungen
- 80 kg: Eisenoxyd
- 20 kg: Filterkuchen aus der Altölaufbereitung

Der Heizwert dieses Produkte lag bei etwa 20.400 J/g (Ho) und war wegen der höheren Anteile an KW-haltigen Produkten noch höher als der Heizwert gemäß Beispiel 2.

### Beispiel 4:

Zur Herstellung eines Brennstoffes für Hochöfen würden zur Herstellung von etwa 1 t die folgenden Ausgangsprodukte eingesetzt:
- 580 kg: Leichtshredder aus der Autoabwrackung
- 200 kg: Kunststoffreste
- 50 kg: Branntkalk
- 50 kg: Wasser
- 120 kg: Walzzunder

Dieser Brennstoff hat einen Heizwert von etwa 18.700 J/g (Ho). Bei dieser Zusammensetzung war die Einsatzmöglichkeit von Entsorgungsstoffen eingeschränkter als bei den Produkten für Zementdrehrohröfen, da das hier anfallende Endprodukt Roheisen nicht verunreinigt werden soll.

### Beispiel 5:

Zur Herstellung eines weiteren Brennstoffes für Hochöfen wurden die folgenden Produkte eingesetzt:
- 380 kg: Leichtshredder
- 300 kg: Kunststoffreste
- 70 kg: Branntkalk
- 60 kg: Wasser
- 190 kg: Walzzunder

Der Heizwert dieses Brennstoffes lag bei etwa 23.600 J/g (Ho).

Bei dem obigen Beispiel 5 bestehen die 300 kg Kunststoffreste aus feinteiligem Kunststoffmaterial, der dem Leichtschredermaterial SLF gleichzusetzen ist, und üblichen Kunststoffresten im Gewichtsverhältnis 2 : 3, sodaß der bevorzugte Mindestgehalt an SLF mit mindestens 50 Gew.% angegeben werden kann.

Die folgende Tabelle stellt eine prozentuale Zusammensetzung der aller Ausgangskomponenten in Gew.% an, wobei die Mischung aus Kunststoffleichtschredder (SLH = 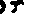 *shredder light fraction")* und Branntkalk (CaO) als kunststoffhaltige Grundkomponente bezeichnet wird.

Die Zusatzkomponente B dient zur Erhöhung des Brennwertes, der in der folgenden Tabelle mit KJ/g (Ho) angegeben ist; sie besteht in den obigen Beispielen aus verbrauchtem Ziehmittel, Kunststoffresten, Polierwartte mit Anhaftungen, Filterkuchen. Sie kann aber auch aus Kohlenstaub, Altöl, bituminösen Bestandteilen, Stearaten und oder anderen KW- haltigen Produkten, wie Fettalkoholen oder Fettabfällen bestehen.

Eine weitere wesentliche Komponente ist Wasser, das einmal in der Grundmischung in Mengen bis zu 15 % und vorzugsweise von 10% und insbesondere in einem Bereich zwischen 5 bis 8 % vorhanden ist.. Bei der späteren Aufbereitung des Brennstoffes aus der Grundmischung und den Zusatzkomponenten soll soviel Wasser zugefügt werden, daß die Endfeuchte des Brennstoffes eine Restfeuchte von 20 bis 30% und vorzugsweise 25 % hat.

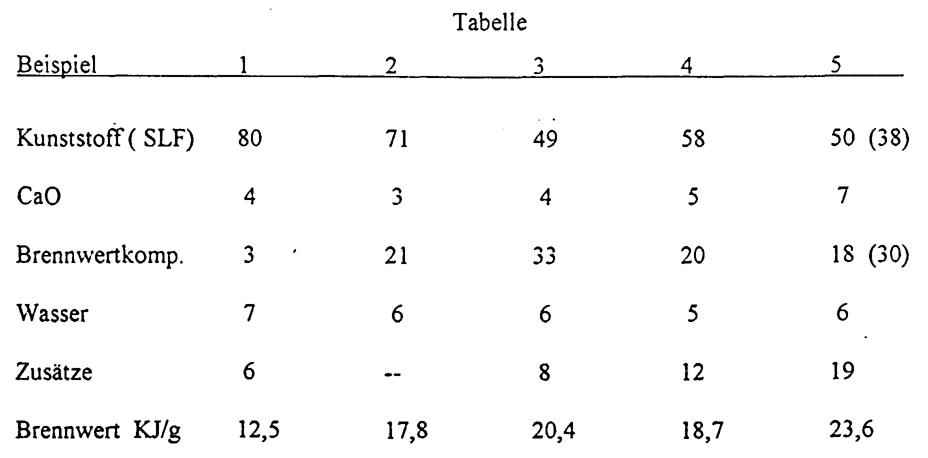

Bei allen erfindungsgemäßen Brennstoffen spielt das CaO bei der Grundkomponente zusammen mit dem vorhandenen und insbesondere mit dem zugegebenem Wasser eine wesentliche und überraschende Rolle . Das Wasser reagiert mit der Rohfeuchte, dem Ansatzwasser und /oder dem zugegebenen Anmachwasser bis zu einer Restfeuchte von maximal 30 % nach der Reaktion

CaO + H₂ O = Ca (OH)₂ + 15 Kcal

Durch diese Reaktion werden einmal die faserigen Bestandteile in der Ausgangskomponente und eventuelle andere faserigen Bestandteile in einen körnigen Habitus gebracht, da das CaO die Fasern ummantelt und bei der Hydratisierung die Fasern gebrochen oder zu körnigem Material aufgerollt werden. Durch die Bildung von Calciumhydroxyd an der Oberfläche der Partikel wird eine elektrostatische Aufladung und letztendlich ein Zusammenbacken der Teilchen vermieden, wodurch die Förderung des feinteiligen Brennstoffes durch Verblasen erleichtert wird. Letztlich wirkt das auf den Partikeln abgelagerte Calciumhydroxyd als Feuchtigkeitspuffer und verhindert im Fertigprodukt die adhäsive Wasseraufnahme, was bei der Lagerung zu einer Unempfindlichkeit gegenüber unharmonisch auftretender Feuchtigkeit führt.

## Patentansprüche

1. Feinteiliger Brennstoff, insbesondere zur Beheizung von Hochöfen oder Zementdrehrohröfen bestehend aus einem Gemisch aus
A - einer Grundkomponente aus
1) zerkleinertem Kunststoff-Abfall (SLF),
2) Branntkalk (CaO),
und
B - ein oder mehreren Zusatzkomponenten enthaltend Kunststoffe, Kohlenstaub, Altöl, bituminöse Bestandteile, Stearate und/oder andere KW-haltige Produkte

2. Brennstoff nach Anspruch 1, dadurch gekennzeichnet daß er als weitere Zusatzkomponente noch eisenhaltige Verbindungen wie Eisenoxide, Schleifstäube und Schleifschlämme enthält.

3. Brennstoff nach einem der Ansprüche 1 und 2, dadurch gekennzeichnet, daß die Grundkomponente A bezogen auf den Brennstoff mindestens 50 Gew.% zerkleinerten Kunststoffabfall (SLF) und 3 bis 10 Gew.% Branntkalk enthält.

4. Brennstoff nach einem der Ansprüche 1 bis 3, dadurch gekennzeichnet. daß der Brennstoff eine Endfeuchte von 20 bis 30 Gew.% Wasser hat.

5. Brennstoff nach einem der Ansprüche 1 bis 4, dadurch gekennzeichnet, daß er eine blas- oder rieselfähige Konsistenz bei einer Teilchengröße von 1 bis 30 mm und vorzugsweise 5 bis 10 mm hat.

6. Brennstoff nach einem der Ansprüche 1 bis 4, dadurch gekennzeichnet, daß er pelletiert oder brikettiert in Stückenform mit Kantenlänge bis 70 mm vorliegt.

7. Brennstoff nach einem der Ansprüche 1 bis 6, dadurch gekennzeichnet, daß er einen Brennwert von mindestens 11.000 KJ hat.

8. Verfahren zur Herstellung eines Brennstoffes gemäß Ansprüchen 1 bis 7, dadurch gekennzeichnet, daß man zur Herstellung der Grundkomponente A eine Mischung aus zerkleinertem Kunststoffabfall (SLF) mit Branntkalk vermischt und durch Wasserzusatz eine Endfeuchte von 20 bis 30 und vorzugsweise 25 Gew.% Wasser einstellt, wobei die Zusatzkomponente B und gegebenenfalls die eisenhaltige weitere Zusatzkomponente während oder nach dieser Vermischung hinzugefügt wird.
